# EUROPÄISCHE PATENTSCHRIFT

(11) **EP 3 418 172 B1**
(45) Veröffentlichungstag und Bekanntmachung des Hinweises auf die Patenterteilung: **11.09.2019**
(21) Anmeldenummer: 18176181.8
(22) Anmeldetag: 06.06.2018
(51) Int. Cl.: B62K 25/00, B60B 27/02

(54) **LAUFRADHALTERUNG**
WHEEL SUPPORT
SUPPORT DE ROUE PORTEUSE

(30) Priorität: 21.06.2017 AT 2622017
(43) Veröffentlichungstag der Anmeldung: 26.12.2018
(73) Patentinhaber: SIMPLON Fahrrad GmbH, 6971 Hard (AT)
(72) Erfinder: Schmeiser, Jonas, 87534 Oberstaufen (DE)
(74) Vertreter: Fechner, Thomas

(56) Entgegenhaltungen:
- WO-A1-2005/120940
- US-A1- 2016 016 628

## Beschreibung

Die vorliegende Erfindung betrifft eine Laufradhalterung, insbesondere für ein Fahrrad, mit zumindest zwei einander gegenüberliegend angeordneten Ausfallenden und zumindest einer Steckachse für ein Laufrad, wobei eines der Ausfallenden ein, insbesondere umfangsgeschlossenes, Durchgangsloch und das dazu gegenüberliegend angeordnete Ausfallende eine Fixierungsvorrichtung für die Steckachse aufweist und die Steckachse in einem fixierten Betriebszustand im Durchgangsloch gelagert und mit einem Fixierungsende der Steckachse in und/oder an der Fixierungsvorrichtung fixiert ist und in einem gelösten Betriebszustand die Steckachse von der Fixierungsvorrichtung losgelöst und im Durchgangsloch entlang einer Längsachse der Steckachse verschiebbar gelagert ist.

Die Laufräder von Fahrrädern sind mittels Achsen zwischen jeweils zwei Ausfallenden einer Laufradhalterung gelagert und gehalten. Bei der Laufradhalterung kann es sich sowohl um eine Fahrradgabel zum Halten des vorderen Laufrades als auch um einen Hinterbau eines Fahrradrahmens zur Halterung des hinteren Laufrades des Fahrrades handeln. Beim Stand der Technik werden häufig sogenannte Schnellspannachsen eingesetzt, welche eine klemmende Befestigung an den Ausfallenden vorsehen. Um die Schnellspannachsen an den Ausfallenden befestigen zu können, müssen die Ausfallenden nach außen hin jeweils eine Öffnung aufweisen, durch die hindurch die Schnellspannachse eingeführt werden kann. Das Problem der weithin bekannten Technologie mit den Schnellspannachsen besteht darin, dass die Position des Laufrades zwischen den Ausfallenden durch die Schnellspannachse nicht eindeutig vorgegeben ist, was insbesondere bei der Verwendung von Scheibenbremsen, aber auch bei der Verwendung von Felgenbremsen bei nicht exakter Ausrichtung des Laufrades zu Schleifgeräuschen an der Bremse führen kann.

Dieser Nachteil wurde beim Stand der Technik durch gattungsgemäße Laufradhalterungen mit sogenannten Steckachsen beseitigt. Bei gattungsgemäßen Laufradhalterungen weist eines der Ausfallenden ein, insbesondere umfanggeschlossenes, Durchgangsloch auf, durch das die Steckachse hindurchgesteckt werden kann. Am anderen Ausfallende wird die Steckachse mittels einer Fixierungsvorrichtung fixiert. Dies ermöglicht es, ein Laufrad mittels der Steckachse sehr exakt und in einer definierten Ausrichtung an den Ausfallenden zu befestigen. Zusätzlich weisen Steckachsen in der Regel auch eine höhere Stabilität und Steifigkeit als die oben genannten Schnellspannachsen auf.

Gattungsgemäße Laufradhalterungen sind in der WO 2005/120940 A2 und der US 2016/0016628 gezeigt.

Aufgabe der Erfindung ist es bei gattungsgemäßen Laufradhalterungen mit Steckachsen die Handhabung und den Montageprozess weiter zu erleichtern.

Hierfür ist eine Laufradhalterung gemäß Patentanspruch 1 vorgesehen.

Durch den erfindungsgemäß vorgesehenen Verlierschutz ist sichergestellt, dass die Steckachse auch im gelösten Betriebszustand nicht vollständig von den restlichen Bauteilen und insbesondere vollständig von beiden Ausfallenden der Laufradhalterung entfernt werden kann. Es wird vermieden, dass bei der Montage die Steckachse im gelösten Betriebszustand herunterfallen oder verloren gehen kann. Weiters muss die Steckachse auch nicht nach vollständigem Lösen von der restlichen Laufradhalterung, von Hand gehalten werden, da sie nach wie vor mittels des Verlierschutzes weiterhin an den restlichen Bauteilen der Laufradhalterung gehalten ist. Der erfindungsgemäß vorgesehene Verlierschutz verhindert somit, dass die Steckachse im gelösten Betriebszustand vollständig von den sonstigen Bauteilen der Laufradhalterung gelöst wird. Dies hat den Vorteil, dass man zur Montage des Laufrades an der Laufradhalterung die Steckachse nicht permanent festhalten muss. Außerdem befindet sich die Steckachse beim Montage- und Demontagevorgang an einer definierten, durch den Verlierschutz vorgegebenen Position. Beides vereinfacht sowohl die Montage als auch die Demontage eines Laufrades in der Laufradhalterung.

Bei erfindungsgemäßen Laufradhalterungen kann es sich sowohl um solche zur Aufnahme eines vorderen Laufrades als auch eines hinteren Laufrades des Fahrrades handeln. Erfindungsgemäße Laufradhalterungen können also als sogenannte Fahrrad- bzw. Federgabel ausgebildet sein. Es kann sich bei erfindungsgemäßen Laufradhalterungen aber auch um den Teil des Hinterbaus eines Fahrradrahmens handeln, in den das hintere Laufrad eingesetzt wird. Darüber hinaus müssen erfindungsgemäße Laufradhalterungen nicht zwingend nur bei Fahrrädern realisiert werden. Erfindungsgemäße Laufradhalterungen könnten auch an anderen Fahrzeugen, insbesondere mit zwei oder mehr Laufrädern, realisiert werden. Die Ausfallenden sind grundsätzlich die Teile bzw. Bereiche der Laufradhalterung, an denen die Steckachse befestigt wird. In der Regel ist eine Steckachse im fixierten Betriebszustand an zwei einander gegenüberliegend angeordneten Ausfallenden befestigt. Eines der Ausfallenden weist das Durchgangsloch zum Hindurchschieben der Steckachse auf. Das andere bzw. dazu gegenüberliegend angeordnete Ausfallende weist die Fixierungsvorrichtung zur Fixierung der Steckachse auf.

Das Durchgangsloch für die Steckachse in dem einen der Ausfallenden ist günstigerweise umfangsgeschlossen ausgebildet. Es ist also von einer Ringstruktur des Ausfallendes mit in sich geschlossenem Ring umgeben. Bei der Fixierungsvorrichtung am anderen Ausfallende kann es sich z.B., wie an sich bekannt, um ein Innengewinde im Ausfallende handeln. In diesem Fall weist die Steckachse als Fixierungsende ein entsprechendes Außengewinde auf, mit dem die Steckachse in das Innengewinde der Fixierungsvorrichtung eingeschraubt werden kann. Grundsätzlich sind natürlich aber auch andere Fixierungsvorrichtungen zur Befestigung der Steckachse an dem einen der Ausfallenden denkbar. Hierfür könnten grundsätzlich auch andere Schraubverbindungen, entsprechend feste Steckverbindungen, Klemmeinrichtungen, bajonettverschlussartige Fixierungsvorrichtungen oder dergleichen eingesetzt werden. Das Fixierungsende der Steckachse wird dann jeweils entsprechend korrespondierend ausgebildet.

Der Verlierschutz für die Steckachse kann grundsätzlich sehr unterschiedlich ausgebildet sein.

Eine erste Variante sieht ein flexibles Element vor, mit dem die Steckachse an einem der Ausfallenden oder an sonstigen Bauteilen der Laufradhalterung befestigt ist. Das flexible Element kann z.B. ein Band, ein Seil, ein Draht oder dergleichen sein.

Besonders bevorzugte Ausgestaltungsformen der Erfindung sehen vor, dass der Verlierschutz an und/oder in dem Ausfallende mit dem Durchgangsloch, vorzugsweise im Bereich des Durchgangslochs, angeordnet, vorzugsweise ausgebildet oder befestigt, ist.

Gemäß der Erfindung ist vorgesehen, dass der Verlierschutz die Steckachse in einer Stellung festhält, in der die Steckachse in dem Durchgangsloch gelagert und vollständig aus einem Zwischenbereich zwischen den Ausfallenden herausgezogen ist. Hierdurch kann die Steckachse vollständig aus dem Zwischenbereich zwischen den Ausfallenden herausgezogen werden, um dann dennoch in dem Durchgangsloch gelagert und dort vom Verlierschutz der Steckachse festgehalten zu sein. Hierdurch wird verhindert, dass die Steckachse vollkommen aus dem Durchgangsloch des Ausfallendes herausfällt und damit vollständig von den sonstigen Bauteilen der Laufradhalterung getrennt wird. Durch solche Arten von Ausgestaltungsformen des Verlierschutz wird also verhindert, dass die Steckachse vollständig aus dem Durchgangsloch des einen Ausfallendes herausgezogen wird. Die Steckachse verbleibt somit auch in der gelösten Betriebsstellung mittels des Verlierschutzes sicher in dem zumindest einen der Ausfallenden, was die Handhabung und den Montage- wie auch den Demontageprozess erleichtert und auch beschleunigt.

Es kann z.B. vorgesehen sein, dass der Verlierschutz eine Rastvorrichtung zur Ausbildung einer Rastverbindung zwischen der Steckachse und einem der Ausfallenden, vorzugsweise dem Ausfallende mit dem Durchgangsloch, aufweist oder ist. Die Rastvorrichtung kann z.B. eine federbelastete oder selbstfedernde Rastnase und eine Rastnasenaufnahme zur Aufnahme der Rastnase aufweisen. Es kann dann z.B. vorgesehen sein, dass die Rastnase an und/oder in dem Ausfallende mit dem Durchgangsloch, vorzugsweise verschiebbar, gelagert ist. Die Rastnasenaufnahme kann z.B. in und/oder an der Steckachse, vorzugsweise im Bereich des Fixierungsendes der Steckachse angeordnet sein. Natürlich könnte auch andersherum eine entsprechende Rastnase an der Steckachse, insbesondere an deren Fixierungsende, ausgebildet sein. Dann würde das Ausfallende die Rastnasenaufnahme aufweisen bzw. tragen.

Andere Varianten der Erfindung können vorsehen, dass der Verlierschutz eine magnetische Haltevorrichtung zum magnetischen Festhalten der Steckachse an einem der Ausfallenden, vorzugsweise an dem Ausfallende mit dem Durchgangsloch, aufweist.

Die magnetische Haltevorrichtung sollte dann zumindest einen Magneten, vorzugsweise in Form eines Permanentmagneten, aufweisen. Mit diesem Magnet kann dann magnetisierbares Material zusammenwirken oder es kann ein Zusatzmagnet, vorzugsweise ebenfalls in Form eines Permanentmagneten, vorgesehen sein, mit dem der Magnet zur Ausbildung der magnetischen Haltevorrichtung zusammenwirkt. In solchen Ausgestaltungsformen könnte man den Magnet auch als Hauptmagnet bezeichnen, um ihn sprachlich klar vom Zusatzmagneten zu unterscheiden. Bevorzugte Varianten sehen vor, dass der Magnet bzw. Hauptmagnet an und/oder in dem Ausfallende mit dem Durchgangsloch gelagert bzw. dort angeordnet ist. Die Steckachse kann dann entsprechend magnetisierbares Material oder den Zusatzmagneten aufweisen. Vorzugsweise befindet sich das magnetisierbare Material bzw. der Zusatzmagnet im Bereich des Fixierungsendes der Steckachse. Natürlich ist auch hier eine Anordnung andersherum denkbar.

In der nachfolgenden Figurenbeschreibung werden bevorzugte Ausgestaltungsformen der Erfindung beispielhaft erläutert. Es zeigen:
Fig. 1 bis 6 Darstellungen zu einem ersten erfindungsgemäßen Ausführungsbeispiel;
Fig. 7 bis 12 Darstellungen zu einem zweiten erfindungsgemäßen Ausführungsbeispiel und
Fig. 13 und 14 Darstellungen zu einem dritten erfindungsgemäßen Ausführungsbeispiel.

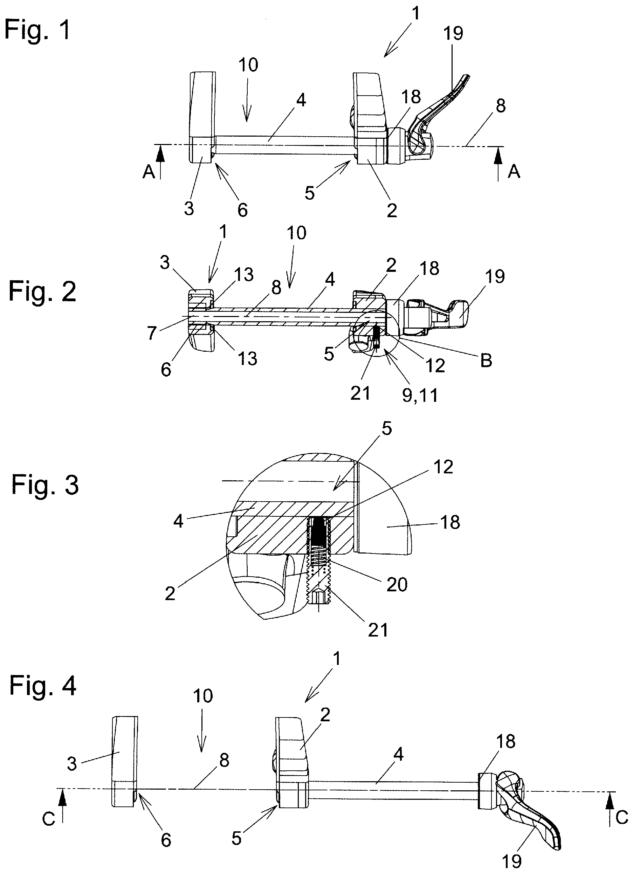

Fig. 1 zeigt den erfindungswesentlichen Bereich einer Laufradhalterung 1 für ein Fahrrad. Es kann sich sowohl um den entsprechenden Bereich einer Fahrrad- bzw. Federgabel für ein vorderes Laufrad als auch um den entsprechenden Bereich eines Hinterbaus eines Fahrradrahmens für ein hinteres Laufrad des Fahrrades handeln. Das Laufrad selbst ist in Fig. 1 wie auch in den anderen Figuren nicht dargestellt. Es kann aber eine an sich bekannte Nabe aufweisen, durch die die Steckachse 4 hindurchgeschoben wird, sodass sich die Nabe samt Laufrad im Zwischenbereich 10 zwischen den Ausfallenden 2 und 3 der Laufradhalterung 1 befindet und auf der Steckachse 4 drehbar gelagert ist. In Fig. 1 ist die Steckachse 4 im fixierten Betriebszustand dargestellt, in dem sie die hier nicht dargestellte Nabe samt Laufrad in definierter Position um die Längsachse 8 der Steckachse 4 drehbar zwischen den Ausfallenden 2 und 3 lagert. In diesem fixierten Betriebszustand ist die Steckachse, wie an sich bekannt, mit ihrem Fixierungsende 7 in der Fixierungsvorrichtung 6 des Ausfallendes 3 fixiert. Weiters ist die Steckachse 4 durch das hier in allen Ausführungsbeispielen umfangsgeschlossen ausgebildete Durchgangsloch 5 im Ausfallende 2 hindurchgesteckt und dort gelagert. In diesem fixierten Betriebszustand gemäß Fig. 1 liegt der an der Steckachse 4 befestigte Anschlag 18 auf der Außenseite des Ausfallendes 2 an. Mit dem Griffhebel 19 kann die Steckachse 4 um ihre Längsachse 8 gedreht werden, um das Fixierungsende 7 in der Fixierungsvorrichtung 6 des Ausfallendes 3 zu fixieren und von diesem wieder zu lösen.

Fig. 2 zeigt den Schnitt AA aus Fig. 1 in einer Ansicht von unten. Dargestellt ist ein Schnitt durch die Steckachse 4 entlang der Längsachse 8 und auch durch die Ausfallenden 2 und 3. In Fig. 2 ist gut zu sehen, dass in diesem, wie auch in den anderen hier gezeigten Ausführungsbeispielen das Fixierungsende 7 der Steckachse 4 als Außengewinde auf der Steckachse 4 ausgebildet ist. Die Fixierungsvorrichtung 6 im Ausfallende 3 ist in diesem Ausführungsbeispiel als ein korrespondierendes Innengewinde ausgebildet, sodass die Steckachse 4 zur Fixierung in der Fixierungsvorrichtung 6 in diese eingeschraubt und zum Lösen aus dieser ausgeschraubt werden kann, indem man die Steckachse 4 in der jeweils entsprechenden Drehrichtung um die Längsachse 8 dreht. Fig. 3 zeigt den Bereich B aus Fig. 2 vergrößert. Dargestellt ist in Fig. 3 und in dem entsprechenden Bereich von Fig. 2 ein Teil des in dem ersten Ausführungsbeispiel als Rastvorrichtung 11 ausgebildeten Verlierschutzes 9, welcher verhindert, dass die Steckachse 4 im gelösten Betriebszustand vollständig von den anderen Bauteilen der Laufradhalterung 1 und damit von den Ausfallenden 2 und 3 gelöst werden kann. In Fig. 3 ist gut zu sehen, dass die hier den Verlierschutz 9 bildende Rastvorrichtung 11 eine federbelastete oder gegebenenfalls auch selbstfedernde Rastnase 12 aufweist. Im gezeigten Ausführungsbeispiel handelt es sich um eine mittels der Spannfeder 20 vorgespannte und in einer Schraube 21 gelagerte Rastnase 12. Durch entsprechend weites Ein- oder Ausschrauben der Schraube 21 in und aus dem Ausfallende 2 kann die Vorspannung der Spannfeder 20 eingestellt werden. In diesem Ausführungsbeispiel ist also die Rastnase 12 an dem Ausfallende 2 mit dem Durchgangsloch 5 verschiebbar gelagert. Im in den Fig. 1 bis 3 dargestellten fixierten Betriebszustand liegt die Rastnase 12 außen an der Steckachse 4 an, ohne in diese einzurasten. Die zu der Rastnase 12 korrespondierenden Rastnasenaufnahme 13 ist in diesem Ausführungsbeispiel, wie dies in Fig. 2 zu sehen ist, an der Steckachse 4 und hier konkret im Bereich des Fixierungsendes 7 der Steckachse 4 angeordnet. Günstigerweise ist die Rastnasenaufnahme 13, wie hier auch realisiert, als in sich umfangsgeschlossene, nach außen offene Nut bzw. Kerbe in der Steckachse 4 realisiert.

Die Fig. 4, 5 und 6 zeigen nun den gelösten Betriebszustand der Steckachse 4, indem die Steckachse 4 von der Fixierungsvorrichtung 6 im Ausfallende 3 losgelöst, aber noch im Durchgansloch 5 entlang der Längsachse 8 der Steckachse 4 verschiebbar gelagert ist. In den Fig. 4 bis 6 ist die Steckachse 4 vollständig aus dem Zwischenbereich 10 zwischen den Ausfallenden 2 und 3 herausgezogen, sodass eine hier nicht dargestellte Nabe eines Laufrades in den Bereich 10 zwischen den Ausfallenden 2 und 3 eingeführt und aus diesem herausgenommen werden kann. Der erfindungsgemäß ausgebildete Verlierschutz 9 verhindert in diesem gelösten Betriebszustand, dass die Steckachse 4 vollständig von der Laufradhalterung 1 gelöst werden kann. In allen drei hier dargestellten Ausführungsbeispielen hält der Verlierschutz 9 die Steckachse 4 in einer Stellung fest, in der die Steckachse 4 in dem Durchgangsloch 5 noch gelagert aber vollständig aus dem Zwischenbereich 10 zwischen den Ausfallenden 2 und 3 herausgezogen ist. Diese Stellung ist die z.B. in den Fig. 4 bis 6 für das erste Ausführungsbeispiel gezeigt.

Weiters ist festzuhalten, dass in allen hier dargestellten Ausführungsbeispielen der Verlierschutz an und/oder in dem Ausfallende 2 mit dem Durchgangsloch 5 angeordnet, vorzugsweise ausgebildet oder zumindest befestigt ist. In den ersten beiden Ausführungsbeispielen ist der Verlierschutz 9 direkt im Bereich des Durchgangslochs 5 ausgebildet.

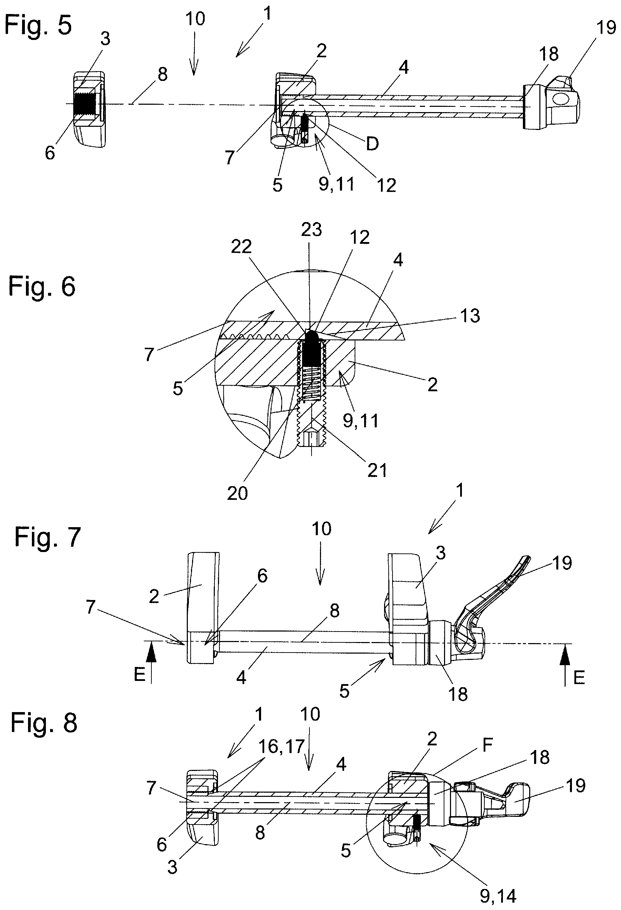

Die Wirkungsweise des hier im ersten Ausführungsbeispiels als Rastvorrichtung 11 ausgebildeten Verlierschutzes 9 ist besonders gut in den Fig. 5 und 6 zu sehen. Fig. 5 zeigt dabei den Längsschnitt entlang der Schnittlinie CC aus Fig. 4 in einer Ansicht von unten. Fig. 6 zeigt den Bereich D aus Fig. 5 vergrößert. Insbesondere in Fig. 6 ist gut zu erkennen, dass die Rastnase 12 in dieser Stellung im gelösten Betriebszustand so in die an der Steckachse 4 ausgebildete Rastnasenaufnahme 13 eingreift, dass ein weiteres Herausziehen der Steckachse 4 aus dem Ausfallende 2 verhindert ist. In Fig. 6 ist dies gut an dem anschlagartig ausgebildeten Ende 22 der Rastnasenaufnahme 13 zu erkennen, an dem die Rastnase 12 anliegt. Das Zusammenwirken von Rastnase 12 und Ende 22 der Rastnasenaufnahme 13 verhindert ein weiteres Herausziehen der Steckachse 4.

Wird die Steckachse 4 hingegen wieder in Richtung zum anderen Ausfallende 3 hin eingeschoben, so wird die Rastnase 12 von der Schrägfläche 23 der Rastnasenaufnahme 13 aus der Rastnasenaufnahme 13 herausgedrückt, sodass die Steckachse 4 dann wieder in Richtung hin zum Ausfallende 3 verschoben und mit ihrem Fixierungsende 7 in der Fixierungsvorrichtung 6 fixiert werden kann, womit dann wieder der fixierte Betriebszustand gemäß der Fig. 1 bis 3 erreicht ist.

Der Vollständigkeit halber wird darauf hingewiesen, dass in allen Ausführungsbeispielen die Fixiervorrichtung 6 und auch entsprechend das Fixierungsende 7 der Steckachse 4 anders als hier dargestellt ausgebildet sein können, wie dies eingangs bereits erläutert wurde.

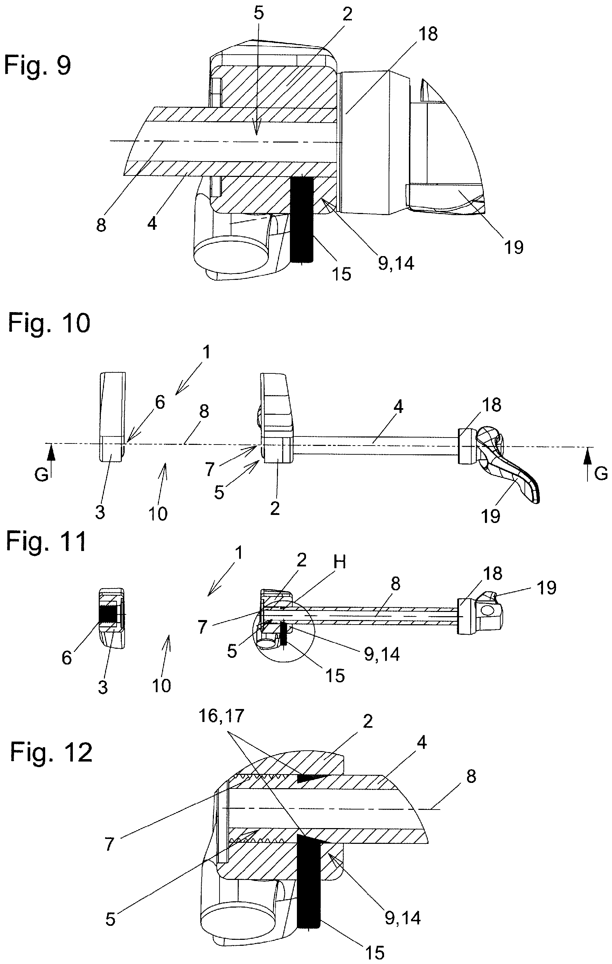

Die Fig. 7 bis 12 zeigen nun ein zweites Ausführungsbeispiel, wie man den erfindungsgemäßen Verlierschutz 9 für die Steckachse 4 ausbilden kann. Die Fig. 7 bis 9 zeigen wiederum den fixierten Betriebszustand, wobei Fig. 8 den Schnitt entlang der Schnittebene EE aus Fig. 7 in einer Ansicht von unten und die Fig. 9 das Detail F aus Fig. 8 zeigt. Die Fig. 10 bis 12 zeigen entsprechend den gelösten Betriebszustand, in dem der Verlierschutz 9 das vollständige Entfernen der Steckachse 4 aus dem Ausfallende 2 verhindert.

Im Folgenden wird beim zweiten Ausführungsbeispiel nur noch auf die Unterschiede zum ersten Ausführungsbeispiel eingegangen. Bezüglich aller anderen Merkmale wird auf die obigen Schilderungen verwiesen.

Der Unterschied zwischen dem ersten und dem zweiten Ausführungsbeispiel liegt in der Art der Ausgestaltung des Verlierschutzes 9. Im zweiten Ausführungsbeispiel ist der Verlierschutz 9 als eine magnetische Haltevorrichtung 14 zum magnetischen Festhalten der Steckachse 4 an dem Ausfallende 2 und damit an dem Ausfallende mit dem Durchgangsloch 5 ausgebildet. Die magnetische Haltevorrichtung 14 dieses Ausführungsbeispiels weist einen, vorzugsweise als Permanentmagnet ausgebildeten Magneten 15 auf, welcher in diesem Ausführungsbeispiel am Ausfallende 2 mit dem Durchgangsloch 5 angeordnet ist. Weiters weist die hier dargestellte Haltevorrichtung 14 ein magnetisierbares Material 16 oder einen Zusatzmagneten 17 auf, welches bzw. welcher in und/oder an der Steckachse 4, hier im Bereich des Fixierungsendes 7 der Steckachse 4, angeordnet ist. In dem gelösten Betriebszustand, wie er in den Fig. 10 bis 12 dargestellt ist, ist die Steckachse 4 wiederum vollständig aus dem Zwischenbereich 10 zwischen den Ausfallenden 2 und 3 herausgezogen. Durch das Zusammenwirken des Magneten 15 mit dem magnetisierbaren Material 16 oder dem Zusatzmagnet 17 wird die Steckachse 4 in dieser Stellung, wie besonders gut in Fig. 12 zu sehen, so festgehalten, dass der erfindungsgemäße Verlierschutz 9 ausgebildet ist, welcher verhindert, dass die Steckachse 4 auch noch aus dem Ausfallende 2 vollständig entfernt wird. Fig. 11 zeigt wiederum einen Schnitt entlang der Schnittlinie GG aus Fig. 10 in einer Unteransicht. Fig. 12 zeigt den Bereich H aus Fig. 11 vergrößert.

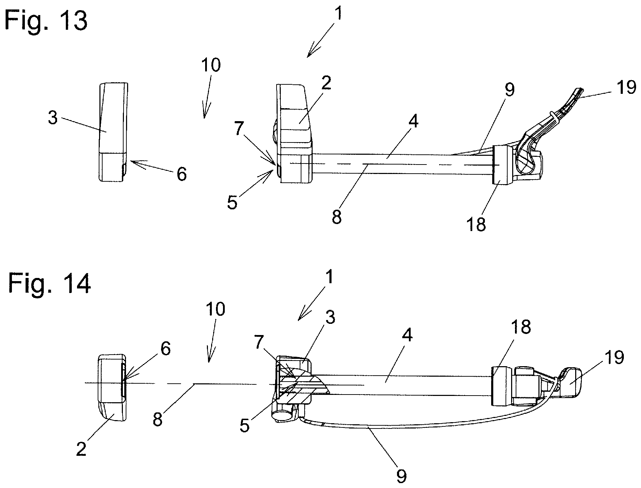

Die Fig. 13 und 14 zeigen ein drittes Ausführungsbeispiel. Auch hier werden nur noch die Unterschiede zu den beiden bisher geschilderten Ausführungsbeispielen erläutert. Bezüglich aller anderen Merkmale wird auf die Schilderung des ersten Ausführungsbeispiels verwiesen.

Auch in diesem dritten Ausführungsbeispiel besteht der wesentliche Unterschied zum ersten Ausführungsbeispiel lediglich in der Ausbildung des erfindungsgemäßen Velierschutzes 9. Dieser ist in diesem Ausführungsbeispiel als ein flexibles Element in Form eines Seiles ausgebildet, welches einerseits an dem Ausfallende 2 mit dem Durchgangsloch 5 und andererseits an der Steckachse 4, hier konkret an deren Griffhebel 19 befestigt ist. In diesem Ausführungsbeispiel ist die Länge dieses flexiblen Elementes 9 so gewählt, dass die Steckachse 4 maximal in die in den Fig. 13 und 14 dargestellte Stellung herausgezogen werden kann. In dieser Stellung ist der Zwischenbereich 10 von der Steckachse 4 wiederum vollständig freigegeben, sodass die Nabe eines Laufrades entsprechend montiert oder demontiert werden kann. Bei dieser Ausgestaltungsform und Länge des flexiblen Elementes 9 hält der so ausgebildete Verlierschutz 9 die Steckachse 4 somit wiederum in einer Stellung fest, in der die Steckachse 4 in dem Durchgangsloch 5 noch gelagert, aber vollständig aus dem Zwischenbereich 10 zwischen den Ausfallenden 2 und 3 herausgezogen ist.

### Legende

### zu den Hinweisziffern:

- 1: Laufradhalterung
- 2: Ausfallende
- 3: Ausfallende
- 4: Steckachse
- 5: Durchgangsloch
- 6: Fixierungsvorrichtung
- 7: Fixierungsende
- 8: Längsachse
- 9: Verlierschutz
- 10: Zwischenbereich
- 11: Rastvorrichtung
- 12: Rastnase
- 13: Rastnasenaufnahme
- 14: magnetische Haltevorrichtung
- 15: Magnet
- 16: magnetisierbares Material
- 17: Zusatzmagnet
- 18: Anschlag
- 19: Griffhebel
- 20: Spannfeder
- 21: Schraube
- 22: Ende
- 23: Schrägfläche

## Patentansprüche

1. Laufradhalterung (1), insbesondere für ein Fahrrad, mit zumindest zwei einander gegenüberliegend angeordneten Ausfallenden (2, 3) und zumindest einer Steckachse (4) für ein Laufrad, wobei eines der Ausfallenden (2) ein, insbesondere umfangsgeschlossenes, Durchgangsloch (5) und das dazu gegenüberliegend angeordnete Ausfallende (3) eine Fixierungsvorrichtung (6) für die Steckachse (4) aufweist und die Steckachse (4) in einem fixierten Betriebszustand im Durchgangsloch (5) gelagert und mit einem Fixierungsende (7) der Steckachse (4) in und/oder an der Fixierungsvorrichtung (6) fixiert ist und in einem gelösten Betriebszustand die Steckachse (4) von der Fixierungsvorrichtung (6) losgelöst und im Durchgangsloch (5) entlang einer Längsachse (8) der Steckachse (4) verschiebbar gelagert ist, **dadurch gekennzeichnet, dass** die Laufradhalterung (1) einen Verlierschutz (9) für die Steckachse (4) im gelösten Betriebszustand aufweist und der Verlierschutz (9) die Steckachse (4) in einer Stellung festhält, in der die Steckachse (4) in dem Durchgangsloch (5) gelagert und vollständig aus einem Zwischenbereich (10) zwischen den Ausfallenden (2, 3) herausgezogen ist.

2. Laufradhalterung (1) nach Anspruch 1, **dadurch gekennzeichnet, dass** der Verlierschutz (9) an und/oder in dem Ausfallende (2) mit dem Durchgangsloch (5), vorzugsweise im Bereich des Durchgangslochs (5), angeordnet, vorzugsweise ausgebildet oder befestigt, ist.

3. Laufradhalterung (1) nach einem der Ansprüche 1 bis 2, **dadurch gekennzeichnet, dass** der Verlierschutz (9) eine Rastvorrichtung (11) zur Ausbildung einer Rastverbindung zwischen der Steckachse (4) und einem der Ausfallenden (2, 3), vorzugsweise dem Ausfallende (2) mit dem Durchgangsloch (5), aufweist.

4. Laufradhalterung (1) nach Anspruch 3, **dadurch gekennzeichnet, dass** die Rastvorrichtung (11) eine festbelastete oder federnde Rastnase (12) und eine Rastnasenaufnahme (13) zur Aufnahme der Rastnase (12) aufweist.

5. Laufradhalterung (1) nach Anspruch 4, **dadurch gekennzeichnet, dass** die Rastnase (12) an und/oder in dem Ausfallende (2) mit dem Durchgangsloch (5), vorzugsweise verschiebbar, gelagert ist und/oder dass die Rastnasenaufnahme (13) in und/oder an der Steckachse (4), vorzugsweise im Bereich des Fixierungsendes (7) der Steckachse (4), angeordnet ist.

6. Laufradhalterung (1) nach einem der Ansprüche 1 bis 2, **dadurch gekennzeichnet, dass** der Verlierschutz (9) eine magnetische Haltevorrichtung (14) zum magnetischen Festhalten der Steckachse (4) an einem der Ausfallenden (2, 3), vorzugsweise an dem Ausfallende (2) mit dem Durchgangsloch (5), aufweist.

7. Laufradhalterung (1) nach Anspruch 6, **dadurch gekennzeichnet, dass** die magnetische Haltevorrichtung (14) einen Magneten (15), vorzugsweise Permanentmagneten, und ein damit zusammenwirkendes magnetisierbares Material (16) oder einen damit zusammenwirkenden Zusatzmagneten (17), vorzugsweise Zusatzpermanentmagneten, aufweist.

8. Laufradhalterung (1) nach Anspruch 6, **dadurch gekennzeichnet, dass** der Magnet (15) an und/oder in dem Ausfallende (2) mit dem Durchgangsloch (5) angeordnet ist und/oder das magnetisierbare Material (16) oder der Zusatzmagnet (17) in und/oder an der Steckachse (4), vorzugsweise im Bereich des Fixierungsendes (7) der Steckachse (4), angeordnet ist.

## Claims

1. A wheel mounting (1), in particular for a bicycle, having at least two dropouts (2, 3) arranged opposite one another and at least one through axle (4) for a wheel, wherein one of the dropouts (2) has a, in particular circumferentially-closed, through hole (5) and the opposite-arranged dropout (3) has a fixing device (6) for the through axle (4) and the through axle (4) is in a fixed operating state mounted in the through hole (5) and fixed in and/or on the fixing device (6) by means of a fixing end (7) of the through axle (4) and the through axle (4) is in a released operating state detached from the fixing device (6) and displaceably mounted in the through hole (5) along a longitudinal axis (8) of the through axle (4), **characterized in that** the wheel mounting (1) has an anti-loss means (9) for the through axle (4) in the released operating state and the anti-loss means (9) secures the through axle (4) in a position in which the through axle (4) is mounted in the through hole (5) and is completely pulled out of an intermediate region (10) between the dropouts (2, 3).

2. A wheel mounting (1) according to claim 1, **characterized in that** the anti-loss means (9) is arranged, preferably formed or secured, on and/or in the dropout (2) with the through hole (5), preferably in the region of the through hole (5).

3. A wheel mounting (1) according to any one of claims 1 to 2, **characterized in that** the anti-loss means (9) has a locking device (11) for formation of a locking connection between the through axle (4) and one of the dropouts (2, 3), preferably the dropout (2) with the through hole (5).

4. A wheel mounting (1) according to claim 3, **characterized in that** the locking device (11) has a heavily-loaded or resilient locking lug (12) and a locking lug receiver (13) to receive the locking lug (12).

5. A wheel mounting (1) according to claim 4, **characterized in that** the locking lug (12) is mounted, preferably displaceably, on and/or in the dropout (2) with the through hole (5) and/or **in that** the locking lug receiver (13) is arranged in and/or on the through axle (4), preferably in the region of the fixing end (7) of the through axle (4).

6. A wheel mounting (1) according to any one of claims 1 to 2, **characterized in that** the anti-loss means (9) has a magnetic holding device (14) for magnetic holding fast of the through axle (4) on one of the dropouts (2, 3), preferably on the dropout (2) with the through hole (5).

7. A wheel mounting (1) according to claim 6, **characterized in that** the magnetic holding device (14) has a magnet (15), preferably a permanent magnet, and a magnetisable material (16) cooperating therewith or an additional magnet (17) cooperating therewith, preferably an additional permanent magnet.

8. A wheel mounting (1) according to claim 6, **characterized in that** the magnet (15) is arranged on and/or in the dropout (2) with the through hole (5) and/or the magnetisable material (16) or the additional magnet (17) is arranged in and/or on the through axle (4), preferably in the region of the fixing end (7) of the through axle (4).

## Revendications

1. Support de roue (1), en particulier pour un vélo, avec au moins deux pattes (2, 3) disposées en se faisant face et au moins un axe enfichable (4) pour une roue, l'une des pattes (2) étant munie d'un trou traversant (5), en particulier fermé sur sa périphérie, et la patte (3) disposée en face de celle-ci étant munie d'un dispositif de fixation (6) pour l'axe enfichable (4), et l'axe enfichable (4), à l'état de fonctionnement fixé, étant logé dans le trou traversant (5) et étant fixé par une extrémité de fixation (7) de l'axe enfichable (4) dans et/ou sur le dispositif de fixation (6), et l'axe enfichable (4), à l'état de fonctionnement libéré, étant détaché du dispositif de fixation (6) et étant logé dans le trou traversant (5) mobile le long d'un axe longitudinal (8) de l'axe enfichable (4), **caractérisé en ce que** le support de roue (1) est muni d'une protection anti-perte (9) pour l'axe enfichable (4) dans l'état de fonctionnement libéré, et la protection anti-perte (9) maintient l'axe enfichable (4) dans une position dans laquelle l'axe enfichable (4) est logé dans le trou traversant (5) et est complètement retiré d'une zone intermédiaire (10) située entre les pattes (2,3).

2. Support de roue (1) selon la revendication 1, **caractérisé en ce que** la protection anti-perte (9) est disposée, de préférence formée ou fixée, sur et/ou dans la patte (2) avec le trou traversant (5), de préférence au niveau du trou traversant (5).

3. Support de roue (1) selon l'une des revendications 1 à 2, **caractérisé en ce que** la protection anti-perte (9) est munie d'un dispositif d'encliquetage (11) pour former une liaison par encliquetage entre l'axe enfichable (4) et l'une des pattes (2, 3), de préférence la patte (2) avec le trou traversant (5).

4. Support de roue (1) selon la revendication 3, **caractérisé en ce que** le dispositif d'encliquetage (11) est muni d'un ergot d'encliquetage (12) à contrainte fixe ou élastique et d'un logement d'ergot d'encliquetage (13) pour recevoir l'ergot d'encliquetage (12).

5. Support de roue (1) selon la revendication 4, **caractérisé en ce que** l'ergot d'encliquetage (12) est logé, de préférence mobile, sur et/ou dans la patte (2) avec le trou traversant (5), et/ou **en ce que** le logement d'ergot d'encliquetage (13) est disposé dans et/ou sur l'axe enfichable (4), de préférence au niveau de l'extrémité de fixation (7) de l'axe enfichable (4).

6. Support de roue (1) selon l'une des revendications 1 à 2, **caractérisé en ce que** la protection anti-perte (9) est munie d'un dispositif de retenue magnétique (14) pour retenir magnétiquement l'axe enfichable (4) sur l'une des pattes (2, 3), de préférence sur la patte (2) avec le trou traversant (5).

7. Support de roue (1) selon la revendication 6, **caractérisé en ce que** le dispositif de retenue magnétique (14) est muni d'un aimant (15), de préférence d'un aimant permanent, et d'un matériau magnétisable (16) interagissant avec lui ou d'un aimant supplémentaire (17) interagissant avec lui, de préférence un aimant permanent supplémentaire.

8. Support de roue (1) selon la revendication 6, **caractérisé en ce que** l'aimant (15) est disposé sur et/ou dans la patte (2) avec le trou traversant (5) et/ou le matériau magnétisable (16) ou l'aimant supplémentaire (17) est disposé dans et/ou sur l'axe enfichable (4), de préférence au niveau de l'extrémité de fixation (7) de l'axe enfichable (4).
